# EUROPÄISCHE PATENTSCHRIFT

(11) **EP 0 416 384 B1**
(45) Veröffentlichungstag und Bekanntmachung des Hinweises auf die Patenterteilung: **29.12.1993**
(21) Anmeldenummer: 90116209.9
(22) Anmeldetag: 24.08.1990
(51) Int. Cl.: B60J 7/057, E05F 15/10

(54) **Betätigungsvorrichtung für ein Lüfterdach eines Fahrzeuges**
Operating device for a vehicle ventilating roof
Dispositif de commande pour un toit à ventilation d'un véhicule

(30) Priorität: 08.09.1989 DE 3930053
(43) Veröffentlichungstag der Anmeldung: 13.03.1991
(73) Patentinhaber: Webasto AG Fahrzeugtechnik, D-82131 Stockdorf (DE)
(72) Erfinder: Borrmann, Hans-Achim, D-8951 Kaltental-Aufkirchen (DE)

(56) Entgegenhaltungen:
- EP-A- 0 064 929
- EP-A- 0 306 950
- DE-A- 3 117 040
- DE-A- 3 639 377
- DE-A- 3 732 413
- DE-A- 3 830 555
- DE-C- 3 536 063

## Beschreibung

Die Erfindung bezieht sich auf eine Betätigungsvorrichtung für ein Lüfterdach eines Fahrzeuges, das einen in der festen Dachhaut ausgebildeten Dachausschnitt aufweist, der mittels eines Deckels verschließbar ist,
- der durch Verschwenken um eine an oder nahe seiner einen Kante liegende Schwenkachse in eine Stellung schwenkbar ist, in welcher die andere Deckelkante in Abstand unterhalb der festen Dachhaut liegt, während die eine Deckelkante mindestens näherungsweise in Höhe der festen Dachhaut gehalten wird, und
- der nach hinten in eine den Dachausschnitt mindestens teilweise freigegebene Offenstellung verschiebbar ist,

wobei die Betätigungsvorrichtung versehen ist mit
- einem die Deckelverstellbewegungen bewirkenden, in seiner Drehrichtung durch Polumkehrung umsteuerbaren Antriebsmotor (18);
- zwei Polumkehrrelais (RV, RR), die den Antriebsmotor stromlos machen, wenn sich beide in einem ersten Betriebszustand befinden, die den Antriebsmotor in einer Drehrichtung laufen lassen, wenn das eine Polumkehrrelais in einen zweiten Betriebszustand gebracht wird, und die den Antriebsmotor in der anderen Drehrichtung laufen lassen, wenn das andere Polumkehrrelais in einen zweiten Betriebszustand gebracht wird;
- einer handbetätigten Schalteinrichtung (SV, SR; TV, TR) zum wahlweisen Ansteuern des einen oder des anderen Polumkehrrelais; und
- einer mit den Steuerstromkreisen der beiden Polumkehrrelais in Wirkungsverbindung stehenden und mindestens einen Positionsschalter (S1, S6) aufweisenden Abfrageeinrichtung (S1, S2, S3; S4, S5, S6, S7) zum Auswerten der jeweiligen Deckeliststellung und zum selbsttätigen Stillsetzen des Antriebsmotors in mindestens einer vorbestimmten Deckelstellung.

Eine solche Betätigungsvorrichtung ist in Verbindung mit einem als Schiebehebedach ausgebildeten Fahrzeugdach, das heißt einem Fahrzeugdach, bei welchem der Deckel in eine Lüfterstellung schwenkbar ist, in der die Deckelhinterkante oberhalb der festen Dachhaut liegt, aus der DE-C-35 36 063 bekannt.
Zum Stand der Technik gemäß Artikel 54 (3) EPÜ gehört ferner ein in EP-A-0 381 066 beschriebenes Lüfterdach, das einen Deckel aufweist
- der durch Verschwenken um eine an oder nahe seiner Hinterkante liegende Schwenkachse in eine Lüfterstellung schwenkbar ist, in welcher die Deckelvorderkante in Abstand unterhalb der festen Dachhaut liegt, während die Deckelhinterkante mindestens näherungsweise in Höhe der festen Dachhaut gehalten wird, und
- der nach hinten in eine den Dachausschnitt mindestens teilweise freigebende Offenstellung verschiebbar ist.

Dabei ist erläutert, daß zur Verstellung des Deckels ein Antriebsmotor vorgesehen sein kann. Es ist jedoch offengelassen, wie dieser Antriebsmotor im einzelnen zweckmäßig anzusteuern ist.

Eine mit einer elektronischen Überbrückungsschaltstufe ausgerüstete Betätigungsvorrichtung für bewegbare Teile in Fahrzeugen, insbesondere ein Schiebehebedach, ist aus der DE-A-38 30 555 bekannt.

Die aus DE-C-35 36 063 und DE-A-38 30 555 bekannten Betätigungsvorrichtungen eignen sich jedoch nicht oder nur bedingt für Lüfterdächer, bei denen in der Lüfterstellung die Deckelvorderkante unterhalb der festen Dachhaut liegt.

Der im Anspruch 1 angegebenen Erfindung liegt die Aufgabe zugrunde, eine Betätigungsvorrichtung zu schaffen, die dem Benutzer eine besonders komfortable und sichere Steuerung eines Lüfterdaches ermöglicht.

Diese Aufgabe wird erfindungsgemäß dadurch gelöst, daß bei einer Betätigungsvorrichtung deer eingangs genannten Art zum Betätigen eines Lüfterdaches, bei welchem die eine Deckelkante die Deckelhinterkante und die andere Deckelkante die Deckelvorderkante ist und bei welchem der Deckel in eine Lüfterstellung schwenkbar ist, in welcher die Deckelvorderkante unterhalb der festen Dachhaut liegt, die Betätigungsvorrichtung ferner mit einer elektronischen Überbrückungsschaltstufe (34) zum selbsttätigen Überbrücken des Positionsschalters zwecks Herausbewegens des Deckels (17) aus der vorbestimmten Deckelstellung bei Betätigung der handbetätigten Schalteinrichtung versehen ist.

Der Deckel des Lüfterdaches läßt sich in vorbestimmter Deckelstellung selbsttätig stillsetzen, und er kann bei relativ geringem Schaltungsaufwand aus dieser Stellung auch immer wieder sicher herausgefahren werden. Aufwendige Sonderbauteile, beispielsweise Stromstoßrelais, sind nicht notwendig.
Durch die Verwendung der beiden Polumkehrrelais ist vermieden, daß der relativ hohe Motorstrom über die handbetätigte Schalteinrichtung fließt. Die handbetätigte Schalteinrichtung kann weitgehend stromlos schalten und dementsprechend aus kleinen, für den Bediener günstig anzuordnenden Schaltern aufgebaut werden.

Die Überbrückungsschaltstufe ist in Abhängigkeit von der mittels der Abfrageeinrichtung erfaßten Deckeliststellung vorzugsweise derart gesteuert, daß sie in einen inaktiven Zustand zurückkehrt, sobald der Deckel die vorbestimmte Stellung verlassen hat. Der mittels der Überbrückungsschaltstufe überbrückbare Positionsschalter liegt vorzugsweise im Erregerstromkreis beider Polumkehrrelais, um diese Erregerstromkreise mindestens in der Lüfterstellung, gegebenenfalls aber auch in der Schließstellung und/oder der Offenstellung des Deckels, zu unterbrechen.

In weiterer Ausgestaltung der Erfindung ist eine in Abhängigkeit von einem Steuerkontakt wirksam gemachte Steuerstufe zum selbsttätigen Verstellen des Deckels in eine vorbestimmte Bezugsstellung bei Betätigen des Steuerkontaktes vorgesehen. Die vorbestimmte Bezugsstellung kann insbesondere die Lüfterstellung sein, während der Steuerkontakt zweckmäßig von einem Türschließkontakt gebildet sein kann. Dadurch läßt sich auf einfache Weise erreichen, daß der Deckel in die vorbestimmte Bezugsstellung, vorzugsweise die Lüfterstellung, übergeht, wenn der Benutzer das Fahrzeug verläßt und die Tür abschließt.

Zweckmäßig ist die Abfrageeinrichtung derart ausgelegt, daß sie bei in der einen oder der anderen Endstellung stehendem Deckel eine Aktivierung der Überbrückungsschaltstufe nur bei Betätigung der handbetätigten Schalteinrichtung im Sinne der Deckelverstellung in Richtung auf die jeweils andere Endstellung zuläßt.

In weiterer Ausgestaltung der Erfindung kann die handbetätigte Schalteinrichtung Tippkontakte aufweisen, denen Selbsthaltestufen parallelgeschaltet sind, die mindestens in einem vorbestimmten Deckelverstellbereich das durch kurzzeitiges Betätigen eines der Tippkontakte jeweils aktivierte Polumkehrrelais aktiviert halten, bis der Deckel eine vorbestimmte Stellung erreicht hat. Auf diese Weise wird es möglich, durch kurzes Antippen den Deckel zur Bewegung von einer vorbestimmten Stellung, z.B. der Lüfterstellung, in eine andere vorbestimmte Stellung, beispielsweise die Schließstellung oder umgekehrt, zu veranlassen. Dies trägt gleichfalls zum Bedienungskomfort bei.

Zweckmäßig ist ferner eine Verriegelungsstufe vorgesehen, die bei Betätigen eines Tippkontakts den jeweils anderen Tippkontakt unwirksam macht und dadurch gegen die Folgen von Fehlbedienungen schützt.

Ausführungsbeispiele der Erfindung sind im folgenden anhand der Zeichnung näher erläutert. Dabei zeigen:
- Fign. 1 bis 4: schematische Längsschnitte eines Lüfterdaches mit unter die Dachhaut zurückschiebbarem Deckel, bei verschiedenen Deckelstellungen,
- Fign. 5 bis 8: schematische Längsschnitte eines Lüfterdaches mit über der festen Dachhaut zurückschiebbarem Deckel, bei verschiedenen Deckelstellungen,
- Fig. 9: ein Schaltbild einer ersten Ausführungsform der Betätigungsvorrichtung für das Lüfterdach nach den Fign. 1 bis 4 oder 5 bis 8,
- Fig. 10: ein Schalterstellungsdiagramm für die Betätigungsvorrichtung gemäß Fig. 9,
- Fig. 11: eine abgewandelte Ausführungsform einer Betätigungsvorrichtung für das Lüfterdach nach den Fign. 1 bis 4 oder 5 bis 8 und
- Fig. 12: ein Schalterbetätigungsdiagramm für die Betätigungsvorrichtung nach Fig. 11.

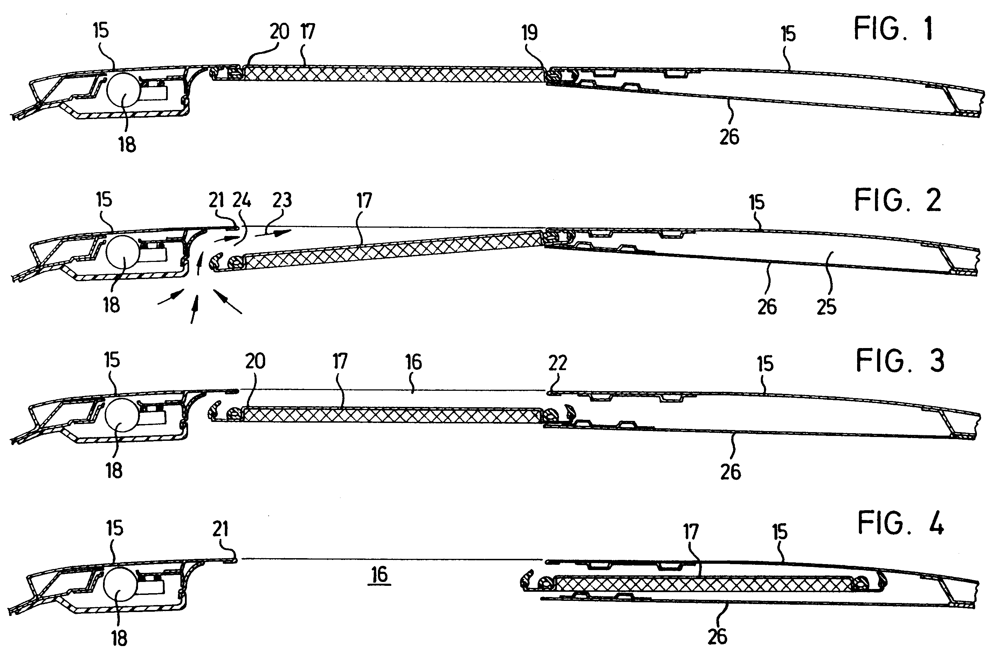

Bei dem in den Fign. 1 bis 4 veranschaulichten Fahrzeug-Lüfterdach ist im vorderen Teil der festen Dachhaut 15 ein Dachausschnitt 16 ausgebildet, der sich zweckmäßig über nahezu die volle Dachbreite erstrecken kann. Der Dachausschnitt 16 läßt sich mittels eines Deckels 17 wahlweise verschließen oder mindestens teilweise freilegen. Die Fig. 1 zeigt den mittels eines Antriebsmotors 18 über einen Verstellmechanismus verstellbaren Deckel 17 in seiner Schließstellung. Der Verstellmechanismus selbst ist nicht veranschaulicht. Bei dem Antriebsmotor 18 handelt es sich um einen Gleichstrommotor, dessen Drehrichtung durch Polumkehrung umgesteuert werden kann.

Wird der Antriebsmotor 18 ausgehend von der Deckelschließstellung gemäß Fig. 1 in einer ersten Drehrichtung wirksam gemacht, erfolgt ein Verschwenken des Deckels 17 um eine an oder nahe seiner Hinterkante 19 liegende (gedachte) Schwenkachse in die in Fig. 2 dargestellte Lüfterstellung. In dieser Lüfterstellung liegt die Deckelvorderkante 20 in Abstand unterhalb des vorderen Randes 21 des Dachausschnittes 16, während die Deckelhinterkante 19 mindestens näherungsweise in Höhe des hinteren Randes 22 des Dachausschnittes 16 gehalten wird. Wenn während der Fahrt des Fahrzeuges an der Außenseite der Dachhaut 15 ein Unterdruck gegenüber dem im Fahrgastraum herrschenden Druck entsteht, bildet sich ein Luftstrom aus, der in Fig. 2 bei 23 angedeutet ist. Das Wageninnere wird durch den Lüftungsspalt 24 zwischen der Deckelvorderkante 20 und dem vorderen Rand 21 des Dachausschnittes 16 entlüftet.

Bei weiterer Betätigung des Antriebsmotors 18 in der ersten Drehrichtung wird der Deckel 17 ausgehend von der Lüfterstellung gemäß Fig. 2 mit seiner Hinterkante 19 unter den hinteren Rand 22 des Dachausschnittes 16 abgesenkt und dabei in die in Fig. 3 veranschaulichte Schiebestellung gebracht, in der er im wesentlichen parallel zu der Dachhaut 15 liegt. Bei Weiterlaufen des Antriebsmotors 18 in der ersten Drehrichtung wird der Deckel 17 nach hinten unter die feste Dachhaut 15 in einen Raum 25 geschoben, der oben von der Dachhaut 15 und unten von einem Dachhimmel 26 begrenzt wird. In Fig. 4 hat der Deckel 17 die Offenstellung erreicht, welche die Endstellung beim Lauf des Antriebsmotors 18 in der ersten Drehrichtung bildet. Durch Umsteuern des Antriebsmotors 18 in eine der ersten Drehrichtung entgegengesetzte zweite Drehrichtung kann der Deckel 17 über die Zwischenstellungen gemäß den Fign. 3 und 2 zurück in die in Fig. 1 veranschaulichte Schließstellung gebracht werden, welche die Deckelendstellung beim auf des Antriebsmotors 18 in der zweiten Drehrichtung ist.

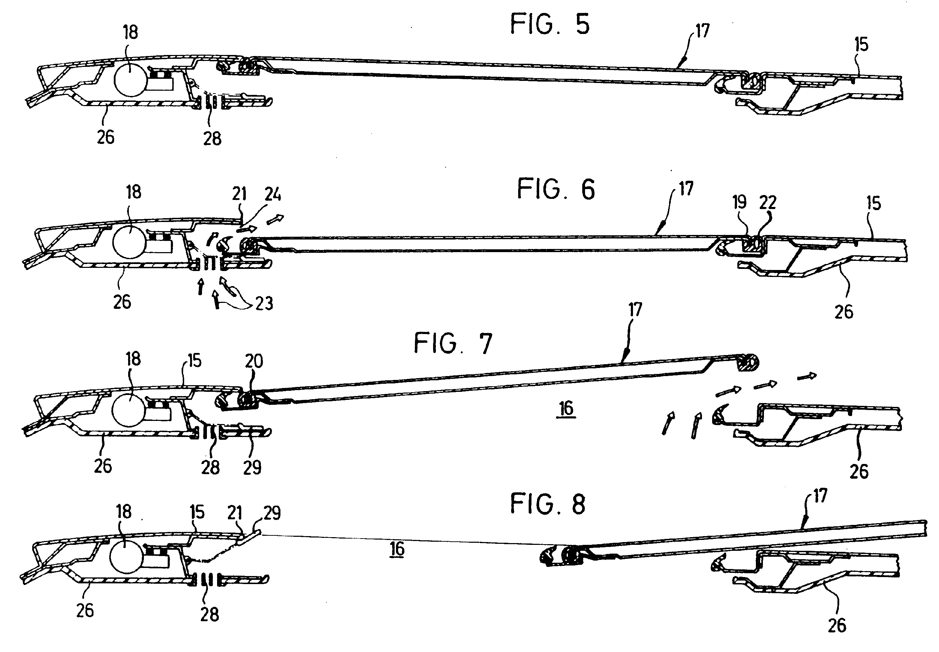

Die vorstehende Erläuterung gilt auch für die abgewandelte Ausführungsform gemäß den Fign. 5 bis 8 mit der Ausnahme, daß dort der Deckel 17 ausgehend von der Lüftungsstellung der Fig. 6 mit seiner Hinterkante 19 nicht abgesenkt (Fig. 3), sondern über den hinteren Rand 22 des Dachausschnittes 16 ausgestellt (Fig. 7) und dann bei Weiterlauf des Antriebsmotors 18 in der ersten Drehrichtung nach hinten über die feste Dachhaut 15 geschoben wird (Fig. 8). Außerdem sind in den Fign. 5 bis 8 zusätzlich ein unterhalb des Lüftungsspaltes 24 liegendes Lüftungsgitter 28 im Dachhimmel 26 sowie ein Windabweiser 29 angedeutet. Der Windabweiser 29 nimmt bei den Deckelstellungen gemäß den Fign. 5,6 und 7 eine Außerbetriebsstellung ein, und er wird selbsttätig in die in Fig. 8 veranschaulichte Arbeitsstellung verschwenkt, wenn der Deckel 17 zurückgeschoben wird. Es versteht sich, daß entsprechende Maßnahmen auch bei dem Lüfterdach gemäß den Fign. 1 bis 4 vorgesehen sein können. Die bei der Ausführungsform nach den Fign. 5 bis 8 dem Deckel 17 zugeordnete Verstellmechanik ist nicht veranschaulicht. Sie kann beispielsweise in der in der Patentanmeldung P 39 03 035.0 im einzelnen beschriebenen Weise ausgelegt sein.

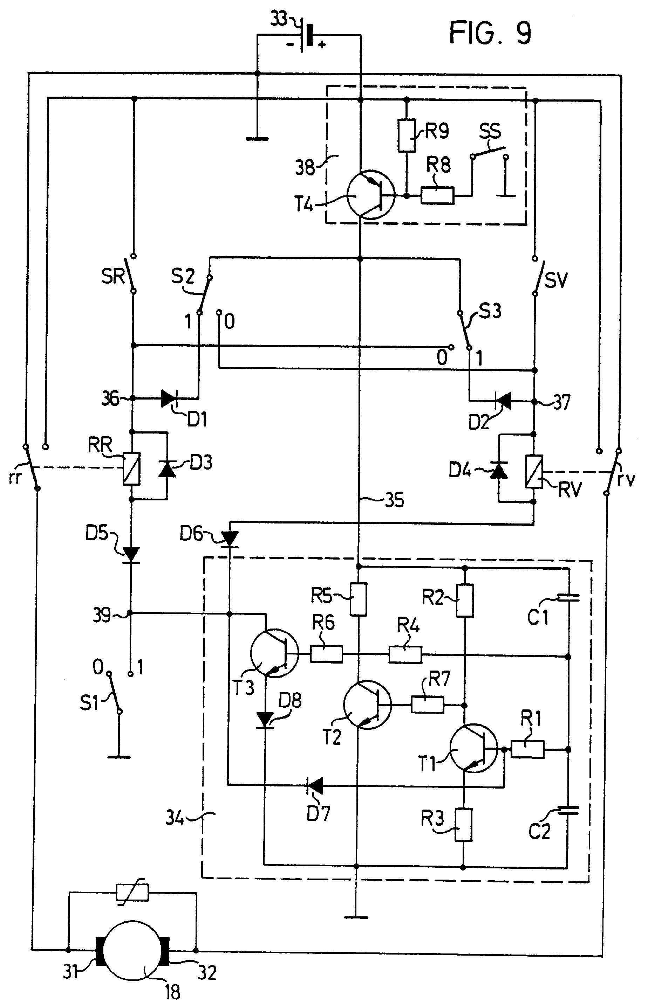

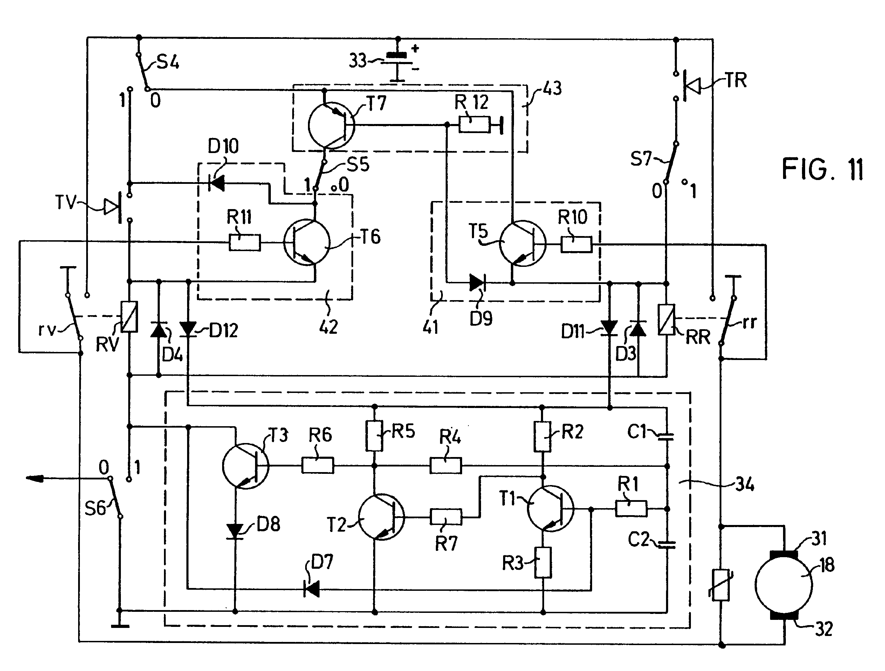

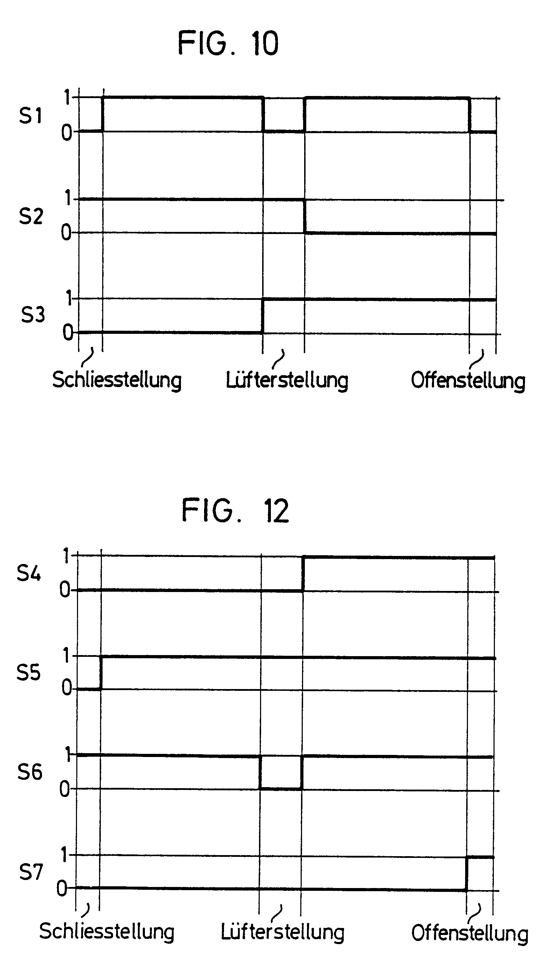

Eine erste Ausführungsform der Betätigungsvorrichtung für das Lüfterdach gemäß den Fign. 1 bis 4 oder 5 bis 8 sei nachstehend anhand der Fign. 9 und 10 erläutert. Dabei sind in Fig. 9 die verschiedenen Relaiskontakte und Schalter in der Stellung veranschaulicht, die sie in der Lüfterstellung gemäß Fig. 2 bzw. Fig. 6 einnehmen.

Die beiden Klemmen 31, 32 des Antriebsmotors 18 lassen sich über Umschaltkontakte rv bzw. rr zweier Polumkehrrelais RV und RR an die eine oder andere Seite einer Gleichspannungsquelle 33 anschließen. Solange beide Relais RV und RR abgefallen sind (Fig. 9), sind beide Motorklemmen 31 und 32 über die Umschaltkontakte rv und rr an den negativen Pol der Gleichspannungsquelle 33 angeschlossen. Der Antriebsmotor 18 ist infolgedessen stromlos. Die Polumkehrrelais RV und RR lassen sich über jeweils einen Handschaltkontakt SV bzw. SR ansteuern. Diese Kontakte liegen in Reihe mit der jeweiligen Relaiswicklung RV bzw. RR. Wird dabei über den Handschaltkontakt SR das Relais RR zum Anzug gebracht, wird über den Umschaltkontakt rr die Motorklemme 31 mit dem positiven Pol der Gleichspannungsquelle 33 verbunden; der Antriebsmotor 18 läuft in der ersten Drehrichtung. Umgekehrt wird beim Anziehen des Relais RV die Motorklemme 32 über den Umschaltkontakt rv an den positiven Pol der Gleichspannungsquelle 33 angeschaltet; der Antriebsmotor 18 dreht sich in der zweiten Drehrichtung.

Mit den Steuerstromkreisen der beiden Polumkehrrelais RV und RR steht ferner eine Abfrageeinrichtung in Wirkungsverbindung, welche die jeweilige Ist-Stellung des Deckels 17 auswertet. Zu dieser Abfrageeinrichtung gehört ein in Abhängigkeit von der Deckelstellung in einer Schaltstellung 0 oder einer Schaltstellung 1 stehender Positionsschalter S1, der mit den Relaiswicklungen beider Relais RV und RR in Reihe liegt. Wie aus Fig. 10 hervorgeht, wird der Positionsschalter S1 in Abhängigkeit von der Deckelposition derart gesteuert, daß er in der Deckelschließstellung (Fign. 1 und 5), in der Deckellüfterstellung (Fign. 2 und 6) sowie in der Deckeloffenstellung (Fign. 4 und 8) jeweils die Schaltstellung 0 einnimmt, während er in allen anderen Deckelpositionen in die Schaltstellung 1 gebracht wird. Parallel zu dem Positionsschalter S1 liegt der über einen Transistor T3 und eine Diode D8 führende Ausgangskreis einer elektronischen Überbrückungsschaltstufe 34. Zu der Deckelstellungs-Abfrageeinrichtung gehören ferner zwei Positionssensorschalter S2 und S3. Der Schalter S2 befindet sich im Bereich der Deckelpositionen zwischen Schließstellung und Lüfterstellung in der Schaltstellung 1. Er geht in die Schaltstellung 0 über, wenn der Deckel 17 die Lüfterstellung in Richtung auf die Offenstellung verlassen hat. Umgekehrt nimmt der Positionssensorschalter S3 seine Schaltstellung 1 im Bereich der Deckelpositionen zwischen der Lüfterstellung und der Offenstellung ein, und er geht in seine Schaltstellung 0 über, wenn der Deckel 17 die Lüfterstellung in Richtung auf die Schließstellung verlassen hat. Die Umschaltkontakte der beiden Positionssensorschalter S2 und S3 sind untereinander und mit dem Eingang 35 der Überbrückungsschaltstufe 34 verbunden. Die der Schaltstellung 1 zugeordneten festen Kontakte der Schalter S2 und S3 stehen jeweils über eine Diode D1 bzw. D2 mit der Verbindungsstelle 36 zwischen dem Handschaltkontakt SR und der Relaiswicklung RR bzw. der Verbindungsstelle 37 zwischen dem Handschaltkontakt SV und der Relaiswicklung RV in Verbindung. Die der Schaltstellung 0 zugeordneten festen Kontakte der Positionssensorschalter S2 und S3 sind an die Verbindungsstelle 37 bzw. die Verbindungsstelle 36 unmittelbar angeschlossen. Parallel zu den Relaiswicklungen RR und RV ist zu Entstörzwecken jeweils eine Diode D3 bzw. D4 geschaltet. Zwischen dem Positionsschalter S1 und den Relaiswicklungen RR und RV liegt jeweils eine Diode D5 bzw. D6.

Die Überbrückungsschaltstufe 34 ist im wesentlichen in der aus der DE-OS 38 30 555 bekannten und dort im einzelnen erläuterten Weise aufgebaut. Sie umfaßt Transistoren T1, T2 und T3, Kondensatoren C1 und C2, Widerstände R1 bis R7 sowie Dioden D7 und D8.

Zu der Schaltungsanordnung gemäß Fig. 9 gehört schließlich eine insgesamt mit 38 bezeichnete Schaltstufe, die einen Transistor T4, Widerstände R8 und R9 sowie einen Schaltkontakt SS aufweist. Der Schaltkontakt SS nimmt normalerweise die in Fig. 9 veranschaulichte Offenstellung ein. Er geht in seine Schließstellung über, wenn die Fahrertür des Kraftfahrzeuges abgeschlossen wird.

Bei der nachstehenden Schilderung der Funktionsweise der Betätigungsvorrichtung nach Fig. 9 sei zunächst angenommen, daß der Schaltkontakt SS offen ist und der Deckel 17 in der Schließstellung steht. In dieser Deckelstellung nehmen entsprechend Fig. 10 die Schalter S1 und S3 die Schaltstellung 0 ein, während der Schalter S2 in der Stellung 1 steht. Wird jetzt der Handschaltkontakt SR geschlossen, gelangt positives Potential vom Pluspol der Spannungsquelle 33 über den Kontakt SR und den Positionssensorschalter S3 zum Eingang 35 der Überbrückungsschaltstufe 34. Dadurch wird über die einen dynamischen Eingangskreis der Schaltstufe 34 bildende Reihenschaltung aus Kondensator C1 und Widerstand R1 ein kurzzeitiger positiver Impuls als Setzsignal auf die Basis des Transistors T1 gegeben. Am Ausgang (Kollektor) des Transistors T1 wird ein Low erzeugt, das über den Widerstand R7 auf den Eingang (die Basis) des Transistors T2 gekoppelt wird. Der Transistor T2 erzeugt seinerseits an seinem Ausgang (Kollektor) ein High, das über den Widerstand R6 auf die Basis des Transistors T3 geht. Der Transistor T3 steuert durch. Strom fließt von der positiven Seite der Spannungsquelle 33 über den geschlossenen Kontakt SR, die Relaiswicklung RR, die Diode D5, den Kollektor-Emitter-Kreis des Transistors T3 und die Diode D8 zur negativen Seite der Gleichspannungsquelle 33. Das Relais RR zieht an. Gleichzeitig wird vom Kollektor des Transistors T2 das High über die Reihenschaltung der Widerstände R4 und R1 an die Basis des Transistors T1 zurückgeführt. Die Widerstände R4 und R1 bilden auf diese Weise eine Selbsthalteschleife, welche die Überbrückungsschaltstufe 34 nach dem Setzen in gesetztem Zustand hält, bis eine weiter unten erläuterte Rückstellung erfolgt. Über den Umschaltkontakt rr wird die Motorklemme 31 mit dem Pluspol der Gleichspannungsquelle 33 verbunden. Der Motor 18 dreht sich in der ersten Drehrichtung. Der Deckel 17 wird in Richtung auf seine Lüfterstellung verschwenkt. Wenn der Deckel 17 aus der Schließstellung herausgefahren ist, schließt entsprechend Fig. 10 der Positionsschalter S1. Dadurch wird das Relais RR angezogen gehalten. Gleichzeitig wird von einem Koppelpunkt 39 aus ein Rückstellsignal (Low) über die Diode D7 auf die Basis des Transistors T1 zurückgekoppelt. Die Überbrückungsschaltstufe 34 wird zurückgesetzt. Der Transistor T3 sperrt. Falls der Handschaltkontakt SR nicht vorher geöffnet wird, verstellt der Antriebsmotor 18 den Deckel 17 bis in die Lüfterstellung, wo der Deckel durch Öffnen des Positionsschalters S1 selbsttätig stillgesetzt wird.

Der in der Lüfterstellung der Fig. 2 bzw. 6 stehende Deckel 17 kann wahlweise in Richtung auf die Schließstellung (Fig. 1 bzw. Fig. 5) oder die Offenstellung (Fig. 4 bzw. Fig. 8) verstellt werden. Um den Deckel 17 in die Offenstellung zu bringen, wird der Handschaltkontakt SR erneut geschlossen. Darauf wiederholen sich die zuvor erläuterten Vorgänge mit der Ausnahme, daß der Positionssensorschalter S3 jetzt in der Schaltstellung 1 steht und infolgedessen das Setzsignal für die Überbrückungsschaltstufe 34 über die Diode D1 und den Positionssenorschalter S2 läuft. Bei Erreichen der Offenstellung wird das Relais RR durch Öffnen des Positionsschalters S1 abgeworfen; der Antriebsmotor 18 wird stillgesetzt.

Um dagegen den Deckel 17 von der Lüfterstellung in Richtung auf die Schließstellung zu verstellen, wird der Kontakt SV von Hand in die Schließstellung gebracht, wodurch ein positiver Setzimpuls über die Diode D2 und den Positionssensorschalter S3 an den dynamischen Eingangskreis C1, R1 der Überbrückungsschaltstufe 34 geht. Der Transistor T3 wird durchgeschaltet. Das Relais RV zieht Strom über einen Stromkreis, der von der Plusseite der Gleichspannungsquelle 33 über den Handschaltkontakt SV, die Relaiswicklung RV, die Diode D6, die Kollektor-Emitter-Strecke des Transistors T3 und die Diode D8 zur negativen Seite der Spannungsquelle 33 führt. Dadurch zieht das Relais RV an; über den Umschaltkontakt rv wird die Motorklemme 32 mit dem positiven Pol der Spannungsquelle 33 verbunden. Der Motor läuft in der zweiten Drehrichtung. Sobald der Deckel 17 die Lüfterstellung verlassen hat, schließt der Positionsschalter S1. Die Überbrückungsschaltstufe 34 wird vom Koppelpunkt 39 aus über die Diode D7 zurückgesetzt. Der Speisestromkreis des Relais RV bleibt über den Positionsschalter S1 geschlossen, bis entweder der Handschaltkontakt SV geöffnet wird oder der Deckel 17 die Schließstellung erreicht, in welcher der Positionsschalter S1 in die Schaltstellung 0 übergeht.

Eine der zuletzt erläuterten Funktion entsprechende Funktion wird erhalten, wenn der Deckel 17 in der Offenstellung steht und von dort in Richtung auf die Lüfterstellung verstellt werden soll. Aufgrund eines durch Schließen des Handschaltkontaktes SV ausgelösten Setzimpulses überbrückt die Schaltstufe 34 den zunächst offenen Positionsschalter S1, der dann schließt, wenn der Deckel 17 aus der Offenstellung herausgelaufen ist (vergleiche Fig. 10). Der Deckel 17 wird stillgesetzt, wenn entweder der Handschaltkontakt SV geöffnet wird oder der Positionsschalter S1 bei Erreichen der Lüfterstellung selbsttätig in die Offenstellung übergeht.

Die fakultativ vorgesehene Schaltstufe 38 hat die Aufgabe, beim Abschließen der Fahrertür den Deckel 17 selbsttätig in die Lüfterstellung (Fig. 2 bzw. Fig. 6) zu bringen, falls er nicht bereits in dieser Stellung steht. Durch Abschließen der Fahrertür wird der Steuerkontakt SS in seine Schließstellung gebracht. Dadurch wird der zuvor gesperrte Transistor T4 durchgesteuert. Steht der Deckel 17 in einer Zwischenstellung zwischen der Lüfterstellung und der Schließstellung, wird beim Durchschalten des Transistors T4 ein Stromkreis geschlossen, der von der Plusseite der Spannungsquelle 33 über den Transistor T4, den in der Schaltstellung 0 stehenden Positionssensorschalter S2, die Relaiswicklung RV, die Diode D6 und den geschlossenen Positionsschalter S1 zur negativen Seite der Gleichspannungsquelle 33 führt. Das Relais RV zieht an. Der Motor 18 wird in der zweiten Drehrichtung in Lauf gesetzt, und er verstellt den Deckel 17, bis dieser die Lüfterstellung erreicht, wo durch selbsttätiges Öffnen des Positionsschalters S1 das Relais RV abgeworfen und infolgedessen der Antriebsmotor 18 stromlos gemacht wird. Steht dagegen beim Schließen des Steuerkontakts SS der Deckel 17 in der Offenstellung, geht über den Transistor T4, den Kondensator C1 und den Widerstand R1 ein Setzimpuls an den Transistor T1. Der Transistor T3 wird durchgesteuert und schließt dadurch den Speisestromkreis des Relais RV. Nachdem der Deckel 17 die Offenstellung verlassen hat, schließt der Positionsschalter S1, während die Überbrückungsschaltstufe 34 in der zuvor geschilderten Weise über die Diode D7 zurückgesetzt wird.

Steht der Deckel 17 dagegen beim Verschließen der Fahrertür in der Schließstellung, wird die Überbrückungsschaltstufe 34 wiederum über den Transistor T4 gesetzt. Das Relais RR zieht über einen Stromkreis an, der von der Plusseite der Spannungsquelle 33 über den durchgesteuerten Transistor T4, den in der Schaltstellung 0 stehenden Positionssensorschalter S3, die Relaiswicklung RR, die Diode D5, die Kollektor-Emitter-Strecke des Transistors T3 und die Diode D8 zur negativen Seite der Spannungsquelle 33 führt. Der Motor 18 läuft durch Umschalten des Umschaltkontakts RR in der ersten Drehrichtung an. Nachdem der Deckel 17 die Schließstellung verlassen hat, wird das Relais RR über den jetzt geschlossenen Positionsschalter S1 gehalten, bis die Lüfterstellung erreicht ist. Entsprechendes gilt, wenn sich der Deckel beim Schließen des Steuerkontaktes SS in einer Zwischenstellung zwischen der Schließstellkung und der Lüfterstellung befindet, mit der Ausnahme, daß in diesem Fall das Relais RR sofort über den geschlossenen Positionsschalter S1 zum Anzug gebracht wird.

Die Dioden D1 und D2 verhindern, daß die Relais RR und RV in unerwünschter Weise über die Überbrückungsschaltstufe 34 unter Strom kommen, wenn beim Schließen des Steuerkontaktes SS der Deckel 17 bereits in der Lüfterstellung steht. Im übrigen wird bei in Schließstellung stehendem Deckel über die Positionssensorschalter S2 und S3 der Handschaltkontakt SV unwirksam gemacht, während die Positionssensorschalter S2, S3 umgekehrt den Handschaltkontakt SR unwirksam machen, wenn der Deckel 17 in der Offenstellung steht. Dadurch wird sichergestellt, daß in den beiden Deckelendstellungen (der Schließstellung und der Offenstellung) der Antriebsmotor nur in einer Drehrichtung eingeschaltet werden kann, in welcher der Deckel in Richtung auf die jeweils andere Endstellung verstellt wird.

Bei der abgewandelten Ausführungsform der Betätigungsvorrichtung gemäß Fig. 11 sind den Komponenten der Schaltungsanordnung gemäß Fig. 9 entsprechende Komponenten mit den gleichen Bezugszeichen versehen. Insbesondere weist auch die Schaltungsanordnung der Fig. 11 den in seiner Drehrichtung durch Polumkehr umsteuerbaren Gleichstrom-Antriebsmotor 18 und die beiden Polumkehrrelais RR für den Lauf des Motors in der ersten Drehrichtung sowie RV für den Lauf des Motors 18 in der zweiten Drehrichtung auf. Die Handschaltkontakte SV und SR der Fig. 9 sind durch handbetätigte Tippkontakte TV bzw. TR ersetzt, die normalerweise offen sind und die wahlweise durch Antippen kurzzeitig in die Schließstellung gebracht oder durch fortgesetztes Drücken in der Schließstellung gehalten werden können. Die Abfrageeinrichtung zum Erfassen der jeweiligen Deckeliststellung besteht aus einem Positionsschalter 56 und Positionssensorschaltern S4, S5 und S7, die in Abhängigkeit von der jeweiligen Deckelposition Schaltstellungen 0 oder 1 entsprechend Fig. 12 einnehmen. Im Verstellbereich zwischen der Deckelschließstellung und der Lüfterstellung kann der jeweils angetippte Tippkontakt TR bzw. TV durch eine elektronische Selbsthaltestufe 41 bzw. 42 überbrückt werden. Die Selbsthaltestufe 41 umfaßt einen Transistor T5, einen Widerstand R10 und eine Diode D9, während zu der Selbsthaltestufe 42 ein Transistor T6, ein Widerstand R11 und eine Diode D10 gehören. Eine Verriegelungsstufe 43 mit einem Transistor T7 und einem Widerstand R12 macht bei Betätigen eines der Tippkontakte TV oder TR den jeweils anderen Tippkontakt unwirksam, um zu verhindern, daß durch eine Fehlbetätigung die Schaltung in die Selbsthaltung geht.

Die Betätigungsvorrichtung gemäß den Fign. 11 und 12 arbeitet im einzelnen wie folgt, wobei zunächst angenommen sei, daß der Deckel 17 in der Schließstellung (Fig. 1 bzw. Fig. 5) steht. Eine Betätigung des Tippkontakts TV hat keine Folgen, weil die beiden Positionssensorschalter S4 und S5 jeweils in ihrer Schaltstellung 0 stehen. Bei Antippen des handbetätigten Tippkontakt TR wird ein Stromkreis geschlossen, der von der positiven Seite der Gleichspannungsquelle 33 über den Tippkontakt TR, den in der Schaltstellung 0 stehenden Positionssensorschalter S7, die Wicklung des Polumkehrrelais RR und den in seiner Schaltstellung 1 stehenden Positionsschalter 56 zur negativen Seite der Spannungsquelle 33 führt. Das Relais RR zieht an, und es verbindet über seinen Umschaltkontakt rr die Motorklemme 31 mit dem Pluspol der Spannungsquelle 33. Der Antriebsmotor 18 beginnt, sich in seiner ersten Drehrichtung zu drehen. Das Umschalten des Relaiskontaktes rr bewirkt außerdem, daß über den Widerstand R10 positives Potential an die Basis des Transistors T5 angelegt wird. Der Transistor T5 schaltet durch. Nach Öffnen des kurzzeitig betätigten Tippkontaktes TR bleibt infolgedessen der Speisestromkreis der Relaiswicklung RR über den Schalter S4 und die Kollektor-Emitter-Strecke des durchgesteuerten Transistors T5 geschlossen. Der Antriebsmotor 18 läuft weiter, bis der Deckel 17 die Lüfterstellung erreicht. In dieser Deckelstellung schaltet der Positionsschalter S6 von der Schaltstellung 1 in die Schaltstellung 0 um. Das Relais RR wird abgeworfen. Der Antriebsmotor 18 wird kurzgeschaltet. In den Zwischenstellungen zwischen der Schließ- und der Lüfterstellung ist die Tippfunktion für den Tippkontakt TV durch den Transistor T7 blockiert.

Von der Lüfterstellung aus kann der Deckel 17 wahlweise zurück in die Schließstellung gebracht oder in Richtung auf die Offenstellung verstellt werden. Zum Öffnen des Deckels wird der Tippkontakt TR geschlossen. Die Selbsthaltestufe 41 ist jedoch im Deckelverstellbereich zwischen der Lüfterstellung und der Offenstellung nicht wirkam, weil der Positionssensorschalter S4 in die Schaltstellung 1 übergegangen ist. In der Lüfterstellung des Deckels 17 ist der Positionsschalter S6 in der Schaltstellung 0, so daß die Relaiswincklung RR beim Betätigen des Tippkontaktes TR nicht unmittelbar über den Positionsschalter S6 an Spannung kommt. Über eine Diode D11, den Kondensator C1 und den Widerstand R1 geht jedoch beim Schließen des Tippkontaktes TR ein kurzzeitiger positiver Setzimpuls an die Basis des Transistors T1 der Überbrückungsschaltstufe 34. Dadurch wird der Transistor T3 durchgeschaltet. Das Relais RR zieht über einen Stromkreis an, der von der positiven Seite der Spannungsquelle 33, den geschlossenen Tippkontakt TR, den Positionssensorschalter S7, die Relaiswicklung RR, die Kollektor-Emitter-Strecke des Transistors T3 und die Diode D8 zurück zur negativen Seite der Spannungsquelle 33 führt. Der Motor 18 wird in der ersten Drehrichtung gestartet. Weil der Deckel 17 die Lüfterstellung in Richtung Offenstellung verläßt, schließt der Positionsschalter S6. Dadurch bleibt der Speisestromkreis des Polumkehrrelais RR geschlossen, während die Überbrückungsschaltstufe 34 über die Diode D7 zurückgesetzt wird. Falls der Kontakt S7 nicht zuvor aus der Schaltstellung 0 in die Schaltstellung 1 gebracht wird, bleibt der Antriebsmotor 18 unter Strom, bis der Deckel 17 die Offenstellung erreicht. In dieser Stellung wird der mit dem Tippkontakt TR in Reihe geschaltete Positionssensorschalter S7 in die Schaltstellung 1 gebracht. Das Relais RR wird abgeworfen. Der Antriebsmotor 18 bleibt stehen.

Soll dagegen der Deckel 17 ausgehend von der Lüfterstellung in die Schließstellung gebracht werden, wird der Tippkontakt TV von Hand geschlossen. Dadurch geht über den in der Schaltstellung 0 stehenden Sensorschalter S4, die Emitter-Kollektor-Strecke des Transistors T7, den in der Schaltstellung 1 stehenden Sensorschalter S5, die Diode D10, den Tippkontakt TV, eine Diode D12, den Kondensator C1 und den Widerstand R1 ein positiver Setzimpuls an die Basis des Transistors T1. Der ausgangsseitige Transistor T3 der Überbrückungsschaltstufe 34 schaltet durch. Die Relaiswicklung RV kommt über den Schalter S4, den Transistor T7, den Schalter S5, die Diode D10, den Tippkontakt TV, den durchgesteuerten Transistor T3 und die Diode D8 unter Strom. Über den Umschaltkontakt rv des Polumkehrrelais RV wird die Motorklemme 32 an die positive Seite der Gleichspannungsquelle 33 angeschaltet. Der Antriebsmotor 18 läuft in der zweiten Drehrichtung an. Gleichzeitig wird auf die Basis des Transistors T6 der Selbsthaltestufe 42 positives Potential aufgeschaltet. Der Transistor T6 wird durchgesteuert. Auch nach Öffnen des Tippkontaktes TV bleibt infolgedessen der Speisestromkreis des Polumkehrrelais RV geschlossen, bis der Deckel 17 die Schließstellung erreicht und in dieser Deckelstellung der Motor 18 durch Übergang des Sensorschalters S5 in seine Schaltstellung 0 stillgesetzt wird.

Ausgehend von der Offenstellung oder einer Zwischenstellung zwischen der Lüfterstellung und der Offenstellung kann der Deckel 17 in die Lüfterstellung durch Schließen und Geschlossenhalten des Tippkontaktes TV gebracht werden. Dabei kommt das Polumkehrrelais RV über einen Stromkreis an Spannung, der von der positiven Seite der Gleichspannungsquelle 33 über den in der Schaltstellung 1 stehenden Sensorschalter S4, den Kontakt TV, die Relaiswicklung RV und den in der Schaltstellung 1 stehenden Positionsschalter S6 zur negativen Seite der Spannungsquelle 33 führt. Der Deckel bleibt stehen, wenn entweder der Tippkontakt TV in die Offenstellung gebracht wird oder der Deckel 17 die Lüfterstellung erreicht und dadurch der Positionsschalter S6 selbsttätig von der Schaltstellung 1 in die Schaltstellung 0 übergeht. Die Diode D10 verhindert in diesem Deckelverstellbereich ein Durchsteuern des Transistors T6.

Von den der Schaltstellung 0 entsprechenden Kontakten der Schalter S5 und S6 können, falls erwünscht, Signale abgenommen werden, die anzeigen, daß der Deckel 17 in der Schließstellung bzw. der Lüfterstellung steht.

## Patentansprüche

1. Betätigungsvorrichtung für ein Lüfterdach eines Fahrzeuges, das einen in der festen Dachhaut ausgebildeten Dachausschnitt aufweist, der mittels eines Deckels verschließbar ist,
- der durch Verschwenken um eine an oder nahe seiner einen Kante liegende Schwenkachse in eine Stellung schwenkbar ist, in welcher die andere Deckelkante in Abstand unterhalb der festen Dachhaut liegt, während die eine Deckelkante mindestens näherungsweise in Höhe der festen Dachhaut gehalten wird, und
- der nach hinten in eine den Dachausschnitt mindestens teilweise freigebende Offenstellung verschiebbar ist, wobei die Betätigungsvorrichtung versehen ist mit
- einem die Deckelverstellbewegung bewirkenden, in seiner Drehrichtung durch Polumkehrung umsteuerbaren Antriebsmotor (18);
- zwei Polumkehrrelais (RV, RR), die den Antriebsmotor stromlos machen, wenn sich beide in einem ersten Betriebszustand befinden, die den Antriebsmotor in einer Drehrichtung laufen lassen, wenn das eine Polumkehrrelais in einen zweiten Betriebszustand gebracht wird, und die den Antriebsmotor in der anderen Drehrichtung laufen lassen, wenn das andere Polumkehrrelais in einen zweiten Betriebszustand gebracht wird;
- einer handbetätigten Schalteinrichtung (SV, SR; TV, TR) zum wahlweisen Ansteuern des einen oder des anderen Polumkehrrelais; und
- einer mit den Steuerstromkreisen der beiden Polumkehrrelais in Wirkungsverbindung stehenden und mindestens einen Positionsschalter (S1, S6) aufweisenden Abfrageeinrichtung (S1, S2, S3; S4, S5, S6, S7) zum Auswerten der jeweiligen Deckeliststellung und zum selbsttätigen Stillsetzen des Antriebsmotors in mindestens einer vorbestimmten Deckelstellung;
**dadurch gekennzeichnet,** daß zum Betätigen eines Lüfterdaches bei welchem die eine Deckelkante die Deckelhinterkante und die andere Deckelkante die Deckelvorderkante ist und bei welchem der Deckel in eine Lüfterstellung schwenkbar ist, in welcher die Deckelvorderkante unterhalb der festen Dachhaut liegt, die Betätigungsvorrichtung ferner mit einer elektronischen Überbrückungsschaltstufe (34) zum selbsttätigen Überbrücken des Positionsschalters zwecks Herausbewegens des Deckels (17) aus der vorbestimmten Deckelstellung bei Betätigung der handbetätigten Schalteinrichtung versehen ist.

2. Betätigungsvorrichtung nach Anspruch 1, dadurch gekennzeichnet, daß die Überbrückungsschaltstufe (34) in Abhängigkeit von der mittels der Abfrageeinrichtung (S1, S2, S3; S4, S5, S6, S7) erfaßten Deckeliststellung derart gesteuert ist, daß sie in einen inaktiven Zustand zurückkehrt, sobald der Deckel (17) die vorbestimmte Stellung verlassen hat.

3. Betätigungsvorrichtung nach Anspruch 1 oder 2, dadurch gekennzeichnet, daß der mittels der Überbrückungsschaltstufe (34) überbrückbare Positionsschalter (S1, S6) im Erregerstromkreis beider Polumkehrrelais (RV, RR) liegt und diese Erregerstromkreise mindestens in der Lüfterstellung des Deckels (17) unterbricht.

4. Betätigungsvorrichtung nach Anspruch 3, dadurch gekennzeichnet, daß der mittels der Überbrückungsschaltstufe (34) überbrückbare Positionsschalter (S1, S6) die Erregerstromkreise der Polumkehrrelais (RV, RR) auch in der Schließstellung und/oder der Offenstellung des Deckels (17) unterbricht.

5. Betätigungsvorrichtung nach einem der vorhergehenden Ansprüche, gekennzeichnet durch eine in Abhängigkeit von einem Steuerkontakt (SS) wirksam gemachte Steuerstufe (38) zum selbsttätigen Verstellen des Deckels (17) in eine vorbestimmte Bezugsstellung bei Betätigen des Steuerkontaktes.

6. Betätigungsvorrichtung nach Anspruch 5, dadurch gekennzeichnet, daß die vorbestimmte Bezugsstellung die Lüfterstellung ist.

7. Betätigungsvorrichtung nach Anspruch 5 oder 6, dadurch gekennzeichnet, daß der Steuerkontakt (SS) ein Türschließkontakt ist.

8. Betätigungsvorrichtung nach einem der Ansprüche 5 bis 7, dadurch gekennzeichnet, daß die Steuerstufe (38) parallel zu der handbetätigten Schalteinrichtung (SV, SR) liegt.

9. Betätigungsvorrichtung nach einem der Ansprüche 5 bis 8, dadurch gekennzeichnet, daß die Steuerstufe (38) mit dem Eingang der Überbrückungs- schaltstufe (34) in Wirkungsverbindung steht.

10. Betätigungsvorrichtung nach einem der Ansprüche 3 bis 9, dadurch gekennzeichnet, daß die Abfrageeinrichtung (S1, S2, S3; S4, S5, S6, S7) derart ausgelegt ist, daß sie bei in der einen oder der anderen Endstellung stehendem Deckel (17) eine Aktivierung der Überbrückungsschaltstufe (34) nur bei Betätigung der handbetätigten Schalteinrichtung (SV, SR) im Sinne der Deckelverstellung in Richtung auf die jeweils andere Endstellung zuläßt.

11. Betätigungsvorrichtung nach einem der vorhergehenden Ansprüche, dadurch gekennzeichnet, daß die handbetätigte Schalteinrichtung Tippkontakte (TV, TR) aufweist, denen Selbsthaltestufen (41, 42) parallelgeschaltet sind, die mindestens in einem vorbestimmten Deckelverstellbereich das durch Betäti- gen eines der Tippkontakte jeweils aktivierte Polumkehrrelais (RV, RR) aktiviert halten, bis der Deckel (17) eine vorbestimmte Stellung erreicht hat.

12. Betätigungsvorrichtung nach Anspruch 11, gekennzeichnet durch eine Verriegelungsstufe (43), die bei Betätigen eines Tippkontaktes (TV, TR) den jeweils anderen Tippkontakt unwirksam macht.

## Claims

1. An operating device for a vehicle ventilation roof having a roof opening constructed in the fixed roof skin and adapted to be closed by means of a cover,
- which, by being pivoted about a pivot axis disposed at or close to one of its edges, can be pivoted into a position in which the other edge of the cover is situated at a distance from and below the roof skin while one edge of the cover is maintained at least approximately at the level of the fixed roof skin, and
- which can be displaced rearwardly into an open position which at least partially exposes the roof opening, the operating device being provided with
- a driving motor (18) which produces the movement of the cover and which is reversible in its direction of rotation by pole reversal;
- two pole reversing relays (RV, RR) which render the driving motor currentless when both are in a first operating state, which cause the driving motor to turn in one direction when one pole reversing relay is moved into a second operating state and which cause the driving motor to turn in the other direction when the other pole reversing relay is moved into a second operating state;
- a manually operated switching means (SV, SR; TV, TR) for optionally actuating one or other pole reversing relay, and
- operatively connected to the control circuits of the two pole reversing relays and comprising at least one position switch (S1, S6), a sensing means (S1, S2, S3; S4, S5, S6, S7) for evaluating the actual position of the cover and automatically immobilising the driving motor in at least one predetermined cover position;
characterised in that for operating a ventilation roof in which one edge of the cover is the rear edge while the other edge of the cover is the front edge and in which the cover can be pivoted into a ventilation position in which the front edge of the cover is situated beneath the fixed roof skin, the operating device is furthermore provided with an electronic bridging stage (34) for automatically by-passing the position switch for the purpose of moving the cover (17) out of the predetermined cover position when the manually operated switching means is operated.

2. An operating device according to claim 1, characterised in that the bridging stage (34) is so controlled as a function of the actual cover position detected by means of the sensing means (S1, S2, S3; S4, S5, S6, S7) that it returns to an inactive state as soon as the cover (17) has left the predetermined position.

3. An operating device according to claim 1 or 2, characterised in that the position switch (S1, S6) which can be by-passed by means of the bridging circuit (34) is situated in the energising circuit of both pole reversing relays (RV, RR) and breaks these energising circuits at least in the ventilation position of the cover (17).

4. An operating device according to claim 3, characterised in that the position switch (S1, S6) which can be bypassed by the bridging circuit (34) also breaks the energising circuits of the pole reversing relays (RV, RR) when the cover (17) is in the closed position and/or the open position.

5. An operating device according to one of the preceding claims, characterised by a control stage (38) which is rendered operative as a function of a control contact (SS), for automatically adjusting the cover (17) by moving it to a predetermined reference position when the control contact is actuated.

6. An operating device according to claim 5, characterised in that the predetermined reference position is the ventilation position.

7. An operating device according to claim 5 or 6, characterised in that the control contact (SS) is a door closing contact.

8. An operating device according to one of claims 5 to 7, characterised in that the control stage (38) is situated parallel with the manually operated switching means (SV, SR).

9. An operating device according to one of claims 5 to 8, characterised in that the control stage (38) is operatively connected to the input of the bridging stage (34).

10. An operative device according to one of claims 3 to 9, characterised in that the sensing means (S1, S2, S3; S4, S5, S6, S7) is so designed that when the cover (17) is in one or other of its extreme positions, it allows the bridging stage (34) to be actuated only upon operation of the manually operated switching means (SV, SR) in such a way as to move the cover in the direction of whichever is the other extreme position.

11. An operating device according to one of the preceding claims, characterised in that the manually operated switching means comprises momentary contact switches (TV, TR) with, connected in parallel with them, latching stages (41, 42) which, until the cover (17) has reached a predetermined position, maintain whichever pole reversing relay (RV, RR) has been activated by operation of one of the momentary contact switches activated at least in a predetermined range of movement of the cover.

12. An operating device according to claim 11, characterised by an interlocking stage (43) which, when one momentary contact switch (TV, TR) is actuated, renders whichever is the other momentary contact switch inoperative.

## Revendications

1. Dispositif de commande pour un toit ouvrant d'un véhicule, comprenant une découpure de toit réalisée dans la couverture de toit fixe, qui peut être fermée au moyen d'un panneau (17).
- qui peut basculer par pivotement autour d'un axe de pivotement situé sur ou près d'un de ses bords (19),dans une position pour laquelle l'autre bord du panneau (20) est situé à une certaine distance en dessous de la couverture de toit fixe, tandis que le premier bord du panneau est maintenu au moins approximativement à la hauteur de la couverture de toit fixe, et
- qui peut coulisser dans une position d'ouverture libérant au moins partiellement la découpure de toit,
tandis que le dispositif de commande est muni :
- d'un moteur d'entraînement (18) provoquant les déplacements du panneau et dont le sens de rotation est réversible au moyen d'une inversion de polarité,
- de deux relais d'inversion de polarité (RV, RR) qui coupent le courant au moteur quand ils se trouvent tous les deux dans un premier état de marche, qui font tourner le moteur dans un sens de rotation quand l'un des relais d'inversion de polarité est amené dans un deuxième état de fonctionnement, et qui font tourner le moteur d'entraînement dans l'autre sens de rotation quand l'autre relais d'inversion de polarité est mis dans un deuxième état de fonctionnement,
- d'un dispositif de commutation manoeuvrable à la main (SV, SR, TV, TR) pour commander au choix l'un ou l'autre des relais d'inversion de polarité, et
- d'un dispositif d'exploration (S1, S2, S3 ; S4, S5, S6, S7), se trouvant en liaison opérationnelle avec les circuits de commande des deux relais d'inversion de polarité et comportant au moins un commutateur de position (S1, S6) pour évaluer la position actuelle respective du panneau et pour arreter automatiquement le moteur de commande au moins dans une position prédéterminée du panneau.
caractérisé
en ce que pour actionner un toit ouvrant dans lequel le premier bord du panneau est le bord arrière du panneau et l'autre bord du panneau est le bord antérieur du panneau, et dans lequel le panneau peut basculer dans une position d'aération pour laquelle le bord antérieur du panneau est situé en dessous de la couverture fixe du toit, le dispositif de commande est muni en outre d'un combinateur électronique de pontage (34) pour court-circuiter automatiquement le commutateur de position dans le but de faire sortir le panneau (17) de la position préfixée en agissant sur le dispositif de commutation à commander manuellement.

2. Dispositif de commande selon la revendication 1, caractérisé en ce que le combinateur de pontage (34) est commandé en fonction de la position actuelle du panneau détectée au moyen du dispositif d'exploration (S1, S2, S3, S4, S5, S6, S7), de façon qu'il retourne dans un état inactif dès que le panneau (17) a quitté la position prédéterminée.

3. Dispositif de commande selon la revendication 1 ou 2, caractérisé en ce que le commutateur de position (S1, S6) pouvant être court-circuité au moyen du combinateur des deux relais d'inversion de polarité (RV, RR), coupe ces circuits d'excitation au moins dans la position d'aération du panneau (17).

4. Dispositif de commande selon la revendication 3, caractérisé en ce que le commutateur de position (S1, S6) pouvant être court-circuité au moyen du combinateur de pontage (34), coupe les circuits d'excitation des relais d'inversion de polarité (RV, RR) également dans la position de fermeture et/ou dans la position d'ouverture du panneau (17).

5. Dispositif de commande selon l'une des revendications précédentes, caractérisé en ce qu'il comprend un maître-oscillateur (38) qu'on rend opérant en fonction d'un contact de commande (S5) pour le déplacement automatique du panneau (17) dans une position de référence préfixée, en agissant sur le contact de commande.

6. Dispositif de commande selon la revendication 5, caractérisé en ce que la position de référence préfixée est la position d'aération.

7. Dispositif de commande selon la revendication 5 ou 6, caractérisé en ce que le contact de commande est le contact de fermeture de portière.

8. Dispositif de commande selon l'une des revendications 5 à 7, caractérisé en ce que le maître-oscillateur (38) est monté en parallèle sur le dispositif de commutation manuel (SV, SR).

9. Dispositif de commande selon l'une des revendications 5 à 8, caractérisé en ce que le maître-oscillateur (38) est en liaison d'action avec l'entrée du combinateur de pontage (34).

10. Dispositif de commande selon l'une des revendications 3 à 9, caractérisé en ce que le dispositif d'exploration (S1, S2, S3, S4, S5, S6, S7) est conçu de façon à n'autoriser, lorsque le panneau (17) se trouve dans l'une ou l'autre des positions extrêmes, que l'actionnement du dispositif de commutation (SV, SR) à main dans le sens du déplacement du panneau en direction de l'autre position extrême respective.

11. Dispositif de commande selon l'une des revendications précédentes, caractérisé en ce que le dispositif de commutation manuel comporte des contacts à impulsion (TV, TR), dont les combinateurs de maintien électroniques (41, 42) sont montés en parallèle, qui maintiennent activé, au moins dans une zone de déplacement du panneau préfixé, le relais d'inversion de polarité (RV, RR) respectivement activé par la commande d'un des contacts à impulsion, jusqu'à ce que le panneau 17 ait atteint une position prédéterminée.

12. Dispositif de commande selon la revendication 11, caractérisé en ce qu'il comprend un combinateur de verrouillage (43) qui, en agissant sur un contact à impulsion (TV, TR), rend inopérant respectivement l'autre contact à impulsion.
